# EUROPEAN PATENT APPLICATION

(11) **EP 1 103 210 A1**
(43) Date of publication of application: **30.05.2001**
(21) Application number: 00202927.0
(22) Date of filing: 22.08.2000
(51) Int. Cl.: A47J 31/40, G07F 9/10

(54) **Device for preparing beverages or the like from water-reconstitutable foodstuffs**

(30) Priority: 23.11.1999 EP 99203922
(71) Applicant: SOCIETE DES PRODUITS NESTLE S.A., 1800 Vevey (CH)
(72) Inventor: Rosse, Meinrad, 1814 La Tour-de-Peilz (CH); Poulin Jean-Marc, 1359 Rances (CH); Lebet Claude René, 1373 Chavornay (CH)
(74) Representative: Borne, Patrice Daniel

(57) **Abstract**

The invention relates to a device for preparing beverages intended, in particular, to equip an automatic dispensing system; the device comprising:
an abrading or cutting means (20),
a pressing means (30) acting on a solid and compact refill (5) based on water-dispersible material, the pressing means (30) exerting a pushing force on the refill (5) against the said abrading means (20) so as to release a determined amount of product thus abraded or cut,
a means (7) for collecting the amount of abraded or cut product.

## Description

The invention relates to the field of the preparation, on demand, of beverages or sauces from water-dispersible foodstuffs such as beverages based on coffee, chocolate, milk, broths or soups, culinary sauces and other similar food preparations. The invention relates more specifically to devices for preparing these beverages or sauces such as those which equip automatic dispensers. The invention also relates to the foodstuffs used to prepare these beverages and to the method of manufacturing these foodstuff products.

It is known practice for beverages to be prepared from pulverulent compositions based on coffee, cocoa or the like, in automatic dispensers. The principle consists in mixing a certain amount of powder with a certain volume of water to reconstitute cold or hot beverages as the case may be. In general, the powder is stored "in bulk" in reservoirs located in the upper part of the dispenser. The powder is collected in a hopper which is a downwards extension of the reservoir. A metering device, such as a metering screw, is positioned horizontally downstream of the hopper so as to supply a desired amount of product on the user's demand. The powder and the water are generally mixed either directly in the beverage container or in an intermediate mixing bowl. The beverage may thus then be dispensed.

This principle of preparation of beverages does have numerous drawbacks. Hence, supplying the dispensers with pulverulent products has to be performed regularly and in sufficient quantity by tipping the product to pour it into the reservoirs. This method of loading is not practical, is not very hygienic and takes a long time to perform. The volumes for the "bulk" storage of product are relatively large, which makes the machines relatively bulky to make sure that they have sufficient service capacity. This may become a major drawback in the case of dispensers in tight spaces, such as dispensers installed in the catering services of certain public transport facilities such as aircraft or trains, for example.

The powder-based products are also highly sensitive to heat and moisture while they are in storage. Lumps of product then tend to form and may lead to problems with metering and blockages in the machine.

Another drawback of the known devices stems from the production of "fines" resulting from the disagglomeration of agglomerated particles based on coffee or the like. These "fines" form a dust which tends to settle out and accumulate at the bottom of the hoppers or canisters thus making metering less accurate as they build up. Regular maintenance is therefore required in order to clean the machine. This also results in a not insignificant wastage of raw material.

Another drawback stems from the absence of physical correspondence or tailoring between the pulverulent product and the preparation device, this having the effect that any arbitrary type of pulverulent product may be substituted in the machine. The impact on the consumer may be negative insofar as he is no longer assured of the constant quality of the products served by comparison with his rightful expectations.

Another drawback arises from the fact that the foodstuff products thus stored in "bulk" have the feature of quickly oxidizing, losing their flavour and freshness because of the relatively large contact area that the products in powder or agglomerated granule form have with the ambient air.

Document US 5,237,910 relates to a beverage dispenser feeding powder or granules into a hopper from storable cartridges, the opening of which is brought about by mechanical means such as knives. A system such as this maintains some of the drawbacks associated with the storage and feed of pulverulent foodstuffs in conventional dispensers.

The object of the present invention is therefore to propose a solution which eliminates these drawbacks.

In particular, one of the objects of the invention is to propose a system for the preparation of beverages or the like which simplifies the operations of refilling, servicing and maintaining the device.

Another object is to eliminate the drawbacks associated with the agglomeration of powders into the form of lumps as a result of the particular heat and moisture conditions.

Another object is to propose a solution which eliminates the production of "fines" and all the associated drawbacks.

Another object of the invention is to contribute to reducing the bulk of the device, particularly to reduce the space required for the storage of the products used to make the beverages, without thereby reducing the service capacity of the preparation device.

Another object of the invention is to propose a system of a device and of products tailored to the device which, among other things, exhibits physical correspondence aimed at encouraging the adoption of a standard or technical standard and therefore makes it possible to reduce the risk of inappropriate or low-quality products being introduced.

Another object of the invention consists in providing a solution which improves the keeping of the foodstuffs that are to be reconstituted and in particular reduces their oxidation and encourages them to give off their aroma only on demand when reconstituting the preparation.

To achieve all this, the invention relates, in a first aspect, to a device intended to take at least one refill of foodstuff product in solid and compact form, the device comprising
at least one abrading or cutting means,
at least one pressing means acting on the refill, the said pressing means being capable of exerting a pushing force on the stick against the abrading or cutting means so as to release a determined amount of abraded or cut product, and
at least one means for collecting the amount of powder thus released.

So, the device is designed to take and process foodstuffs in the form of solid and relatively compact refills, the bulk of which is lower than that of the powdery or granular products usually packaged "in bulk". The proposed mechanical means of the device have the advantage of producing, on demand, only an amount that can be dispersed in the water, thus limiting the area of contact between the product and the air and also encouraging the aroma to be given off only at the time of preparation.

The device preferably comprises an abrading or cutting means which has an abrading or cutting surface which thus, on demand, converts a desired amount of the refill into a residue of powder, granules, flakes, chips or the like. In a preferred embodiment, the abrading or cutting means is of the rotary type. A means such as this has the advantage of not being very bulky, of having good efficiency, and of being easy to operate.

The device advantageously comprises a refill supply comprising a reservoir intended to take a stack of a number of refills so as to ensure continuity of supply and metering on demand of precise and repeatable amounts of abraded and cut product.

As the case may be, the collection means is a nonremovable element of the device, supplied with water, such as a mixing chamber. In an alternative, the collection means is a removable element such as a removable serving container of the cup, mug, bowl type, or some other container.

The invention thus also relates to the foodstuff-based product which is in the form of a solid stick which can be gradually abraded to the form of solid residue of powder, granules, flakes or chips, and has the ability of being dispersed in an aqueous medium.

As a preference, the solid stick has a mass per unit volume of between 0.75 and 1.65 g/cm³. As a preference, the mass per unit volume is between 0.8 and 1.3 g/cm³ in the case of soluble coffee. A stick such as this may therefore be about three to five times less bulky than an equivalent amount of powder or granules stored in bulk, the mass per unit volume of which is generally close to 0.2-0.25 g/cm³.

The invention also relates to the method for preparing a preparation based on a water-dispersible product, comprising
an operation of abrading or of cutting a solid refill based on a water-dispersible material, by a mechanical abrading or cutting means so as to release a determined amount of cut or abraded product,
an operation of mixing the volume of powder thus released with a determined volume of liquid so as to reconstitute the said preparation.

According to another aspect, the invention also relates to the method of manufacturing a refill of material that can be dispersed in an aqueous medium, characterized in that it comprises the following operations:
a predetermined amount of pulverulent material is placed in a mould,
the said volume is subjected to sufficient compression to lead to the formation of a solid block when the compression force is released,
the said block thus formed is released from the mould.

In an alternative, the method of manufacturing the refill comprises the following operations:
a continuous strip formed of pulverulent material is extruded,
the continuous strip is subjected to rolling in at least two distinct directions and, preferably, directions which are roughly perpendicular to the longitudinal direction of travel of the strip so as to form a rolled strip, the mass per unit volume of which is roughly uniform,
the strip is cut into sections of the desired length.

These features and advantages of the invention, together with others, will become apparent from the detailed description and the drawings which are given by way of nonlimiting examples, in which:
Figure 1 depicts a side view of a device for preparing a beverage according to the invention;
Figure 2 is a view from above of the view of Figure 1;
Figure 3 is a front view of the view of Figure 1;
Figure 4 is a diagrammatic side view showing the principle of feeding a refill into the device during a first stage;
Figure 5 is a diagrammatic front view showing the principle of feeding a refill into the device, during a second stage;
Figure 6 is a view similar to Figure 5, during a third stage;
Figure 7 is a diagrammatic view of the device, showing the arrangement of the detection system;
Figure 8 is a diagrammatic sectioned view of the principle of manufacture of a refill in a first phase during which an amount of product or granules is poured into the compression device;
Figure 9 is a view similar to that of Figure 7, in which the amount of powder is being compressed;
Figure 10 is a similar view in which the refill thus compressed is being extracted;
Figure 11 is a profile view of the refill obtained according to the compression principle of Figures 8 to 10;
Figure 12 is a front view of the refill of Figure 11;
Figure 13 illustrates the schematic principle of the manufacture of refills by extrusion then rolling in at least two directions;
Figure 14 illustrates a schematic diagram of a device according to an alternative form of the invention;
Figure 15 illustrates a preferred profile of the cutting tool;
Figure 16 diagrammatically illustrates a drinks dispenser according to a preferred embodiment of the invention, in which the dry zone and the wet zone are separate.

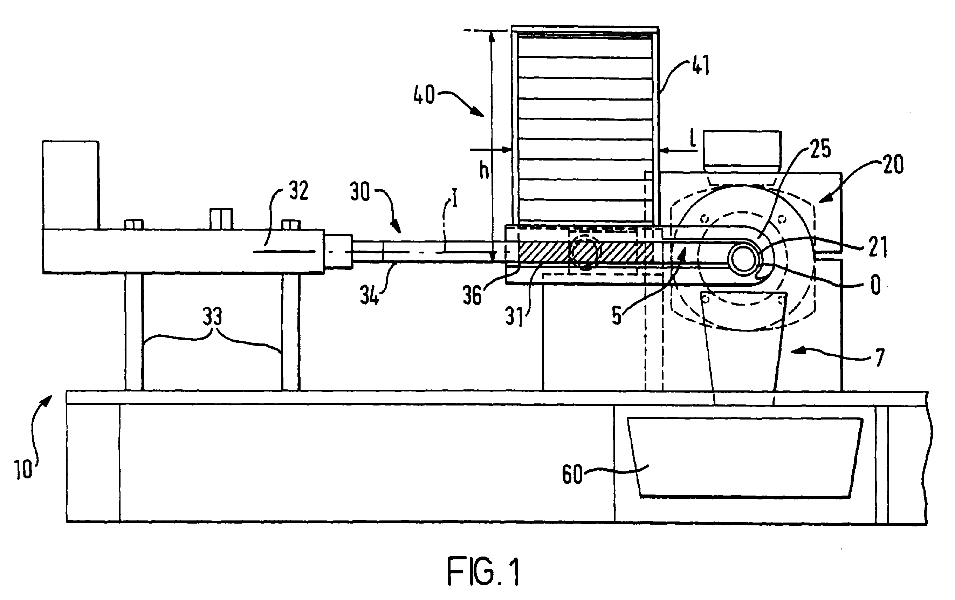

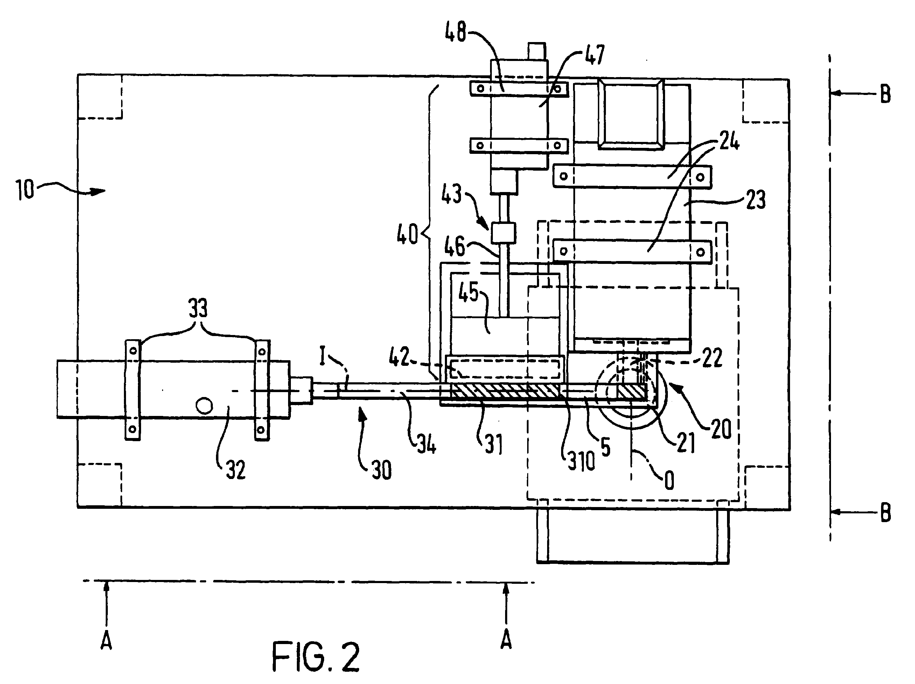

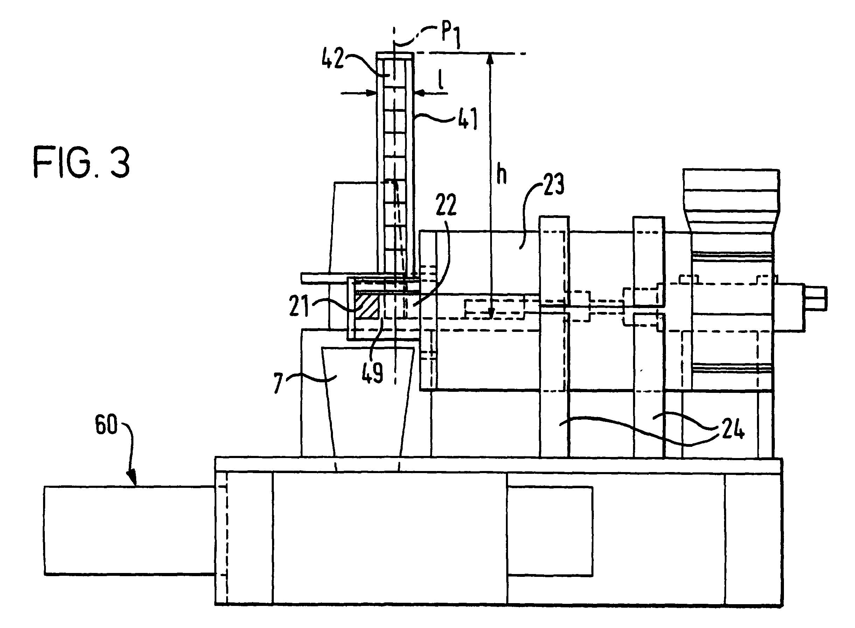

The device for preparing beverages or sauces, depicted in Figures 1 to 3, by way of an illustration of the preferred embodiment, is a machine comprising the essential elements of the invention but in which certain functional elements which may form part of the make-up of conventional beverage dispensers have been deliberately omitted, for example the cabinet, the electrical power supply and control system, the water supply and heating system, etc., these having been omitted for reasons of simplification and for a better understanding of the invention.

In general, the device according to the invention therefore comprises a chassis 10 on which are mounted an abrading or cutting unit 20, a pressing unit 30 acting on a refill 5 of food product towards the abrading or cutting unit 20 and a feed and storage unit 40 which feeds the pressing unit 30 with refills. A collection means 7 is placed at the outlet of the abrading and cutting unit. This collection means 7 may be a container for serving to the consumer, such as a cup, a mug, a bowl or the like. A mechanical stirring means may advantageously be provided to improve the mixing in the container prior to serving. The stirring may also be ensured in full or in part by the pressure of the liquid entering the container and by the position of the liquid inlet into the container which may encourage the creation of swirling movements within the container.

In an alternative which has not been depicted, the collection means may be an intermediate part of the preparation device, in which the preparation that is to be served is mixed, such as a mixing zone coupled to one or more abrading units and a liquid supply.

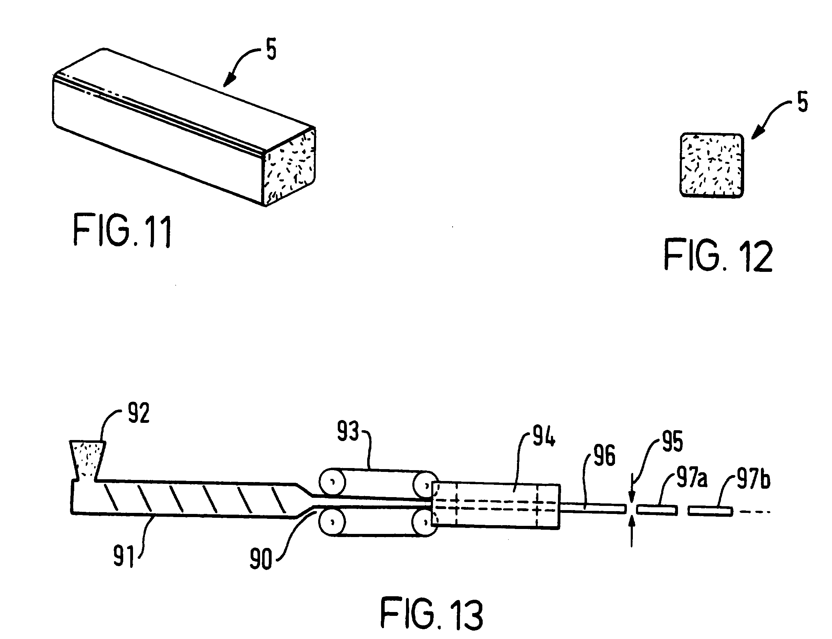

The device is supplied with refills 5 based on reconstitutable foodstuffs. These refills 5 are in the form of solid individual sticks illustrated by way of example in Figures 11 and 12. They are preferably of parallelepipedal shape and have a mass of between 10 and 200 grammes, preferably between 15 and 50 grammes. The shape and the dimensions of the sticks may of course vary greatly according to the desired type of machine, its capacity, or alternatively according to the nature and characteristics of the foodstuff, etc.

The abrading or cutting unit 20 comprises a cutting or abrading tool or element of the rotary type 21, which is mounted on a rotation spindle 22 of axis of rotation "O" connected to an electric motor 23 secured to the chassis by connecting means 24. The abrading or cutting element is in the form of a cylinder, the outer surface of which is structured in such a way as to exhibit teeth, fluting, striations or knurling. Conclusive tests have been performed with an element with a diameter of between 25 and 35 mm and a rotational speed of between 200 and 2060 revolutions per minute.

Instead of having a cylindrical surface, the abrading element may also form a planar abrading or cutting surface which is given a rectilinear motion or a rotary motion. In the case of a rectilinear motion, it may be an abrading strip supported by rollers, for example. The strip may be moved back and forth or may have a continuous motion. It may also be an abrading surface in the form of a disk given a rotary motion, and against which the stick is pressed.

The pressing unit 30 comprises a pressing means which acts on the rear end of the individual refill 5 in which it is engaged by pushing this refill towards the abrading and cutting unit 20. To do this, the pressing means has a piston block 31 connected by means of a pin 34 to a ram 32 which moves longitudinally and is electrically powered, itself mounted securely on the chassis 10 by connecting elements 33. The piston block 31 acts in a direction of pushing I on the refill 5 which is roughly normal to the axis of rotation O of the abrading or cutting element 21. In the pushing configuration, the engaged refill 5 is aligned with the axis I. The pushing force is distributed over a transverse surface 310 of the piston which surface is intended to come into contact with a complementary surface of the refill or stick 5. The surface is preferably a planar surface directed perpendicularly to the direction of pushing I.

The pushing force exerted by the piston/ram assembly on the stick towards the abrading or cutting element is preferably defined with a determined feed rate. The feed rate is preferably constant. However, it may be envisaged for the piston to be activated with a variable, progressive or regressive feed rate. Conclusive tests have been performed with feed rates of at least 65 mm/min. It is to be noted that the metered amount for the preparation of a beverage or the like, corresponding to the amount abraded or cut by the abrading or cutting unit 20 and collected, can be determined according to the distance covered by the refill in the pressing unit, taking account of the known mass per unit volume of the refill.

The refill 5 engaged in the pressing unit 30 is arranged against a lower guide surface 36 of the pressing unit. This guide surface 36 is roughly horizontal, parallel to the axis I, and allows the refill to be guided in the direction of pushing I until the refill has been completely worn or abraded away upon contact with the abrading or cutting means. The surface 36 then preferably comes flush with the surface of the rotary element 21, leaving a minimum space of the order of a few tenths of a millimetre to a few millimetres, determined in such a way as to allow only those particles of the desired size to pass through and to prevent excessively large particles from passing through. Particles of excessive size therefore remain in contact with the tool until they are ground up and converted into particles of a smaller size capable of passing through the said space.

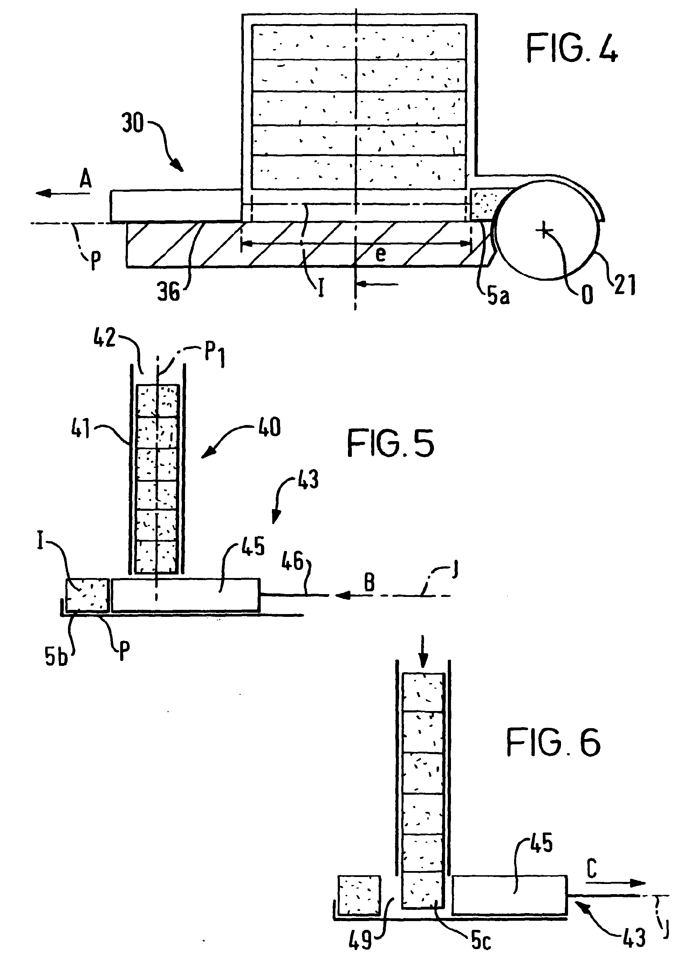

To ensure uniform release of residue without forming broken-off chunks or pieces larger than the reconstitution size, it is important for the guide surface 36 to be located above the axis of rotation O of the rotary element, as shown more precisely in Figure 4. Specifically, if the guide surface extended below this axis, the surface at which wear takes place would have a weaker wedge-shaped trailing edge which would tend to break, releasing chunks or pieces of a size that might present a problem of dispersion in water and would also have the drawback of undesirably increasing the envisaged dose.

The device according to the invention finally comprises a feed unit 40 which constantly feeds the pressing unit in order to guarantee constant metering of product. For that, a reservoir or loader 41 is arranged on the side of the pressing unit. More specifically, the reservoir comprises a housing 42 extending roughly vertically in a plane P1 roughly parallel to the direction of pushing I. The housing is sized to be able to take a number of refills or sticks 5, thus forming a free vertical stack. For that, the housing has a length L and a width 1 significantly greater than the width of the stick and a height h several times greater than the height of a stick.

The refill is engaged by means of a pushing member 43 arranged on the side of the device and comprising a transverse piston comprising a pushing block or piston block 45 and a rod 46 coupled to an electric ram 47 itself mounted securely on the chassis by connecting means 48. The lower base of the reservoir has a through opening 49 in the direction of the transverse axis J, with dimensions large enough to allow the passage of a refill and that of the piston block 45 in its transverse back and forth movements when reloading the pressing unit 30.

Figures 4 to 6 illustrate the principle of the cycle of feeding the device with sticks. Figure 4 shows the stage in which, having worn down the stick 5a to a determined level, the pressing means 30 is moved, in the direction I, in the direction A longitudinally away from the pushing direction. The movement leaves a longitudinal space "e", of a length at least equivalent to the length of a new refill. Figure 5 shows the next stage in which the transverse pushing member 43 then pushes on a new refill 5b in the direction J parallel to the horizontal plane P and perpendicular to the direction of pushing I in the direction shown by the arrow B. Pushing is maintained until the refill 5b reaches the correct position in the pressing unit; that is to say until the element comes into line with the direction of longitudinal pushing of axis I. A portion of the lateral surface may serve to stop the element in the aligned position. The piston block 45 then occupies a position in the opening 49 that allows the refills stacked in the housing 42 of the loader to bear down on the piston block 45. The next stage illustrated in Figure 6 consists in returning the piston block 45 to its starting position shown by the arrow C. In this position, the opening is once more uncovered to allow a fresh refill 5c to drop down into the loader so that it can occupy a standby position in the opening 49 before a new feed cycle is begun.

It is to be noted that the feed cycle is initiated when it is detected in the pressing unit that the current refill has been worn down to a determined level. Detection of the amount of wear may be performed by various means such as by proximity sensors arranged between the longitudinal piston block 31 and a fixed part of the device, thus giving an indication of the relative forward position of the piston block 31. When the predetermined limiting position of advance of the longitudinal piston block 31 is reached, a signal is emitted by the sensors to a central control unit which then commands the start of the feed cycle. It will therefore be understood that feed occurs constantly without interruption to the abrading or cutting cycle. A new refill is brought into the continuation of the refill which is in the course of being used before the latter has been completely converted into residue. Metering which is constant over time and uninterrupted is thus maintained.

It is to be noted that the electric ram of the loading unit may be replaced by a system of the electromagnet type operating on the two-position principle: a retracted position in which the piston block is outside the reservoir, and an engaged position in which the piston block is introduced into the reservoir.

The amount of product abraded or cut by the abrading or cutting unit 20 may be controlled by various ways. A first way consists in determining the amount of abraded or cut product according to the measurement of the relative advance of the stick or, and this is equivalent, by measuring the relative advance of the piston block 41 with respect to the mechanical abrading or cutting means or any other appropriate fixed reference of the device. In other words, the release of a dose of product simply depends on the distance travelled by the stick or, and this is equivalent, by the piston block. For example, "x" grammes of coffee powder needed to produce a beverage of a given concentration will correspond to a distance "y" covered by the piston block in the device. The distance "y" will be calculated mainly according to the dimensions and mass per unit volume of the stick.

Another control method consists in envisaging the amount of product released being determined according to a measurement of the mass of product released and collected. In this second instance, the device comprises a means of measuring the mass, such as a balance 60, on which the container 7 rests. Measuring the mass therefore gives an indication as to whether to continue with or stop the abrading and longitudinal-pushing cycle.

Numerous variations and possible functions may be introduced into the device without departing from the scope of the invention. For example, one could envisage the pressing means as described being replaced by a different mechanical means such as an eccentric pushing means of the cam or some other type.

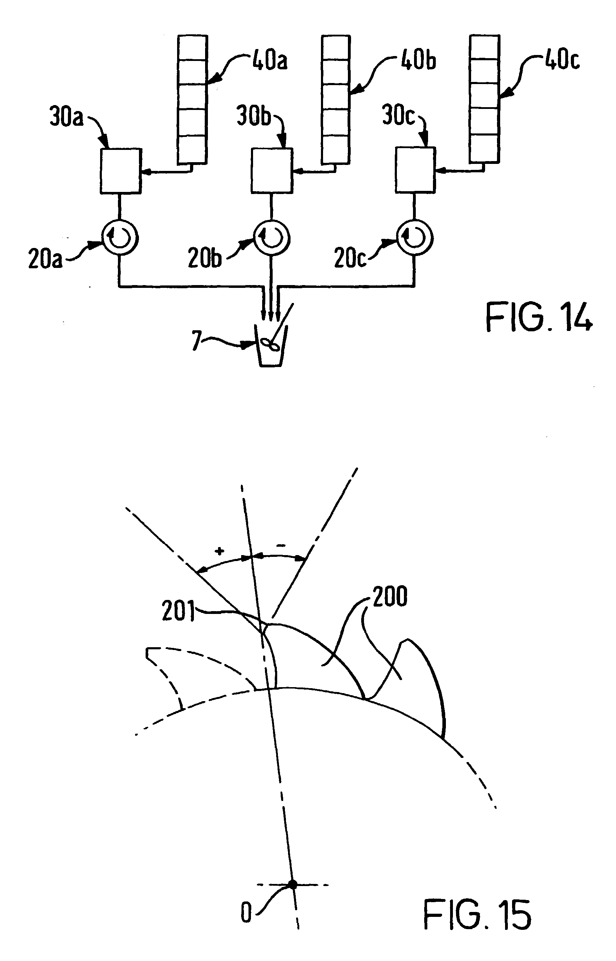

It is also possible to envisage installing a number of series of units mounted in parallel in a more complicated device so as to allow several types of beverage or sauce to be produced, as well as combinations in desired proportions of several types of product. Figure 14 illustrates this principle. The device comprises three distinct series each comprising a feed unit 40a, 40b, 40c, a pressing unit 30a, 30b, 30c and an abrading or cutting unit 20a, 20b, 20c. The three series communicate with a common collection means 7 which may either be a cup or the like or an intermediate chamber. The cutting or abrading units may advantageously be connected so that they can be engaged selectively with a motor that is common to all the units.

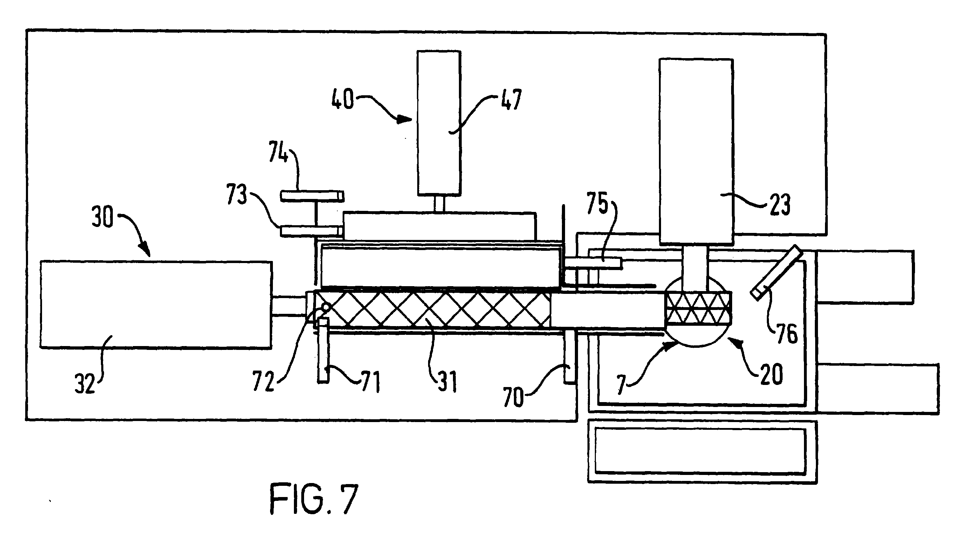

Figure 7 illustrates the position of the detection means of the device. Detecting the nibble advance through the abrading unit is performed by a first detection element 70 located near the abrading unit 20 and which is able to send a signal to a control system (not depicted) and thus activate the programme for loading a new stick into the abrading unit. The detection element may be of the inductive type and be activated as a source element 72 borne by the piston block 31 passes, this element being one such as a metal pellet. A second, stationary, detection element 71, also of the inductive type, situated behind the first element 70 is activated when the piston block 31 reaches a retracted position when the source element 72 moves past this second detection element 71. The second detection element 71 gives information that the piston block is in the correct position before starting a new stick.

Two detection elements 73, 74, of the same type as the previous ones, are oriented parallel to each other in the direction of the piston block 45 of the feed unit 40 so as to make sure that the piston block is in the correct position in the positions of engagement in the opening 49 of the reservoir and of return to the retracted position according to the feed cycle diagram.

A detection element 75, preferably of an optical type, provides information as to the presence of a stick in the opening 49 of the reservoir. Finally, a detection element of the optical type provides information as to the presence of a container 7 under the cutting or abrading tool.

One example of the principle of operation of the control may be as follows:
There is an automatic or manual mode of selection. In automatic mode, the main programme comprises the following stages:
(1) Checking the position of the piston block 31 when in the withdrawn position corresponding to activation of the cell 71,
(2) Checking the position of the piston block 45 when in the withdrawn position corresponding to activation of the cell 74,
(3) Starting the programme to load a stick and activating the motor of the abrading unit, or sending an error message if the positions at (1) and (2) are abnormal,
(4) Checking, by means of the optical detector, that there is a cup present, and zeroing the balance,
(5) Activating the pressing ram,
(6) Checking the weight achieved,
(7) Deactivating the pushing ram,
(8) Resuming the cycle from (4).

The reload subroutine comprises, after selecting automatic mode:
(9) Checking the maximum advance of the pushing ram,
(10) If maximum advance has not been reached, repeating from (9),
(11) If maximum advance has been achieved, repeating from stage (1) and the following stages to activate the loading of a new stick.

The invention also relates to the actual foodstuff product intended to be fed into the device. The product may be in the form of sticks or in any other appropriate form such as pellets, plugs, tablets, etc., as long as the device is set out in an appropriate way to take and process all the envisageable alternative forms. However, the shape of a stick with a square or rectangular cross section seems technically to be the most practical one in so far as it allows for easier stacking, movement, guidance and processing.

The product, in the form of refills, has to be able to be abraded or cut into the form of solid residue of powder, granules, flakes or chips with the ability of then being dispersed in a liquid medium, preferably an aqueous medium, which may or may not be heated as the case may be. The size of residue to be produced may vary according to the nature of the product and its ability to disperse in the medium when reconstituting the beverage. The term "dispersible" is to be understood as meaning that the residue is soluble or partially soluble. In some instances, the product may contain small-diameter particles or inclusions which are not soluble in water, such as spices, fats, condiments or dried herbs, for example. The liquid medium added may be an aqueous medium in the case of beverages and preparations of the soup type, or a fatty liquid medium or an emulsion of the oil-in-water or water-in-oil type in the case of sauces or other culinary preparations. The medium may be heated or may be at room temperature or may be refrigerated, as the case may be.

The refill may be based on foodstuffs chosen from pulverulent compositions based on powders or agglomerates of concentrate of soluble coffee, cocoa, milk, chicory, soups, sauces or compositions containing fruit, which may be sweetened or provide energy and can be reconstituted in a liquid medium. As the case may be, the materials may be partially or fully dehydrated, freeze dried compactable materials. It is preferable to use base powders obtained by an atomization process. For economical reasons, it is not necessary for this powder to be put through an agglomeration process generally performed when producing finished products such as soluble coffee. However, a product which has been atomized and then agglomerated may also be used. Powders, such as soluble coffee, obtained by freeze drying, may also be used. However, the best results have been obtained from atomized soluble coffee with a mass per unit volume of between 200 and 250 g/litre, preferably 225 to 235 g/litre. It has also been found that a product based on soluble coffee with a moisture content of between 3.5 and 5% and preferably of 4% seems to produce a residue of finer particles, therefore particles which are more readily soluble, with less effect on the soiling of the cutting tool than a product with a moisture content in excess of 5%. For example, a coffee product with a 6% moisture content produces far more particles of sizes which cause problems of water-solubility requiring the use of a mixer and increasing the preparation time.

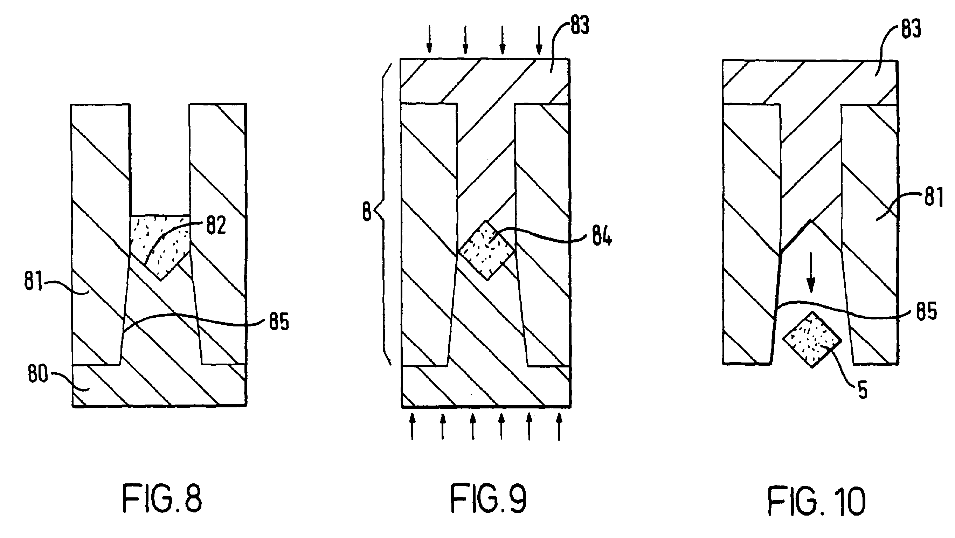

Block products forming the refills of the device of the invention can be manufactured by various methods. Figures 8 to 10 illustrate one of the preferred methods which consists in obtaining the products by mechanical compression. To do this, use may be made of a mechanical press 8 capable of compressing sticks to a pressure preferably of between 20 MPa and 50 MPa.

As shown in Figure 8, a certain amount of powder or granules of foodstuff, such as powdered coffee or soluble agglomerate, is introduced into a housing formed by a subassembly comprising a lower cavity 80 and a mould body 81. The starting material, in the case of soluble coffee, for example, has a mass per unit volume of about 0.2 to 0.25 g/cm³. The lower cavity is fitted with a part pattern 82 in the overall shape of a half diamond. The press is closed by means of an upper cavity 83 equipped with a part pattern 84 the shape of which is roughly symmetric with that of the part pattern 82 (Figure 9). Pressure is applied by the press for a sufficient length of time.

The compression factor can vary according to the nature of the foodstuff used. The compression factor may be about 3 to 5 which means that the mass per unit volume of the end product is of the order of 0.75 to 1.65 g/cm³. For a foodstuff such as soluble coffee, the mass per unit volume is of the order of 1 to 1.3 g/cm³. The standard soluble coffee concentration in the beverage can vary from 1 to 1.7% by weight (namely about 1.5 to 2.5 g for 150 ml of water); which represents, for a stick weighing about 30 g, the possibility of serving about 12 to 20 150-ml instant coffees per stick.

The lower cavity 80 is then opened to release the stick 5 thus compressed. To do that, it may be envisaged for the release edges 85 of the body of the press to be flared out slightly at the bottom to encourage the stick to come out. It should be noted that the shape of the cavities is also designed to encourage stick release.

It should be noted that various factors may influence the compaction ability. In particular, the most important factors are: the nature of the foodstuff, the compacting pressure, the temperature of the product during compacting, the relative moisture content, the presence of additives or binders which encourage binding, such as fats of the oil or some other type.

Likewise, additives which enhance the flavour or aroma may be added to the products that are to be compacted. For example, coffee aromas or the like in an aqueous or oily phase may be used. Likewise, flavours or aromas in the form of capsules may be envisaged. The capsule support may be maltodextrine, for example.

In particular, it has been found during tests that, in the case of atomized soluble coffee, a coffee temperature of at least 50°C, preferably of the order of 65°C ± 2°C, was needed for products with a relative moisture content of about 4%. Below that temperature, the stick becomes too friable and cannot be stored well enough. When the relative moisture content increases, it becomes necessary to work at lower temperatures to avoid agglomeration phenomena which could make moulding difficult. For example, for a relative moisture content of about 6% in the case of soluble coffee, the ideal temperature is 20°C. An excessive moisture content also tends to create problems of the soiling of the abrading tool during the conversion into residue in the machine.

Temperature regulation of the product may be achieved either in an oven, for example, or in the chamber in which the pulverulent product is conditioned before it is charged into the mould. The compression mould is also preferably heated to the optimum temperature. As a general rule, the temperature of the product has to be kept constant between 20 and 80°C, depending on the product.

Another method of manufacture illustrated in Figure 13 consists in making the sticks or any other shape of refill by the extrusion/rolling technique. To do that, a continuous strip 90 is extruded using a single-screw or twin-screw extruder 91, starting out with materials of the pulverulent type 92 such as the powder that forms the basis of soluble coffee, obtained by atomization. On leaving the die, the continuous strip or extrudate, undergoes rolling in a first direction by means of a first rolling means 93 then rolling in a second direction by means of a second rolling means 94 oriented, for preference, approximately perpendicularly to the first rolling means 93. The rolling means 93, 94 are preferably funnel shaped, with a wider inlet, encouraging a reduction in cross section of the strip to convert it to the desired profile. The speeds of rotation of the rolling means are chosen to be very slightly higher than the extrusion rate so as thus to compensate for the reduction in cross section. The rolling means are arranged one with respect to the other preferably with a partial overlap. The rolling is performed in such a way as to obtain a roughly uniform mass per unit volume and acceptable dimensional tolerances. The extrusion and rolling conditions are determined in such a way as to avoid phenomena of the vitrification of the product, which may lead to problems of solubility or of reconstitution in the liquid. This then yields a continuous rolled strip 96 of roughly uniform mass per unit volume. The strip is then cut into sections (97a, 97b) of the desired length by means of a cutting tool 95. It may be envisaged for this method to be used to form co-extruded sticks forming at least two parts of different material, such as a first part based on soluble coffee, and a second part based on soluble compacted powdered milk, for example, for constituting beverages of the cappuccino or "café au lait" type.

Figure 15 shows a profile of the cutting tool of the preparation device according to the invention, which makes it possible to obtain satisfactory results. On its periphery, the tool has a series of teeth 200 comprising an attack portion 201 that makes a negative cutting angle. A portion such as this with a negative cutting angle makes it possible to increase the particle size and avoids conversion into excessively volatile dust. The cutting angle is, by definition, the angle that the surface of the attack portion 201 forms with the radial line passing through the cutting end point as shown in Figure 15.

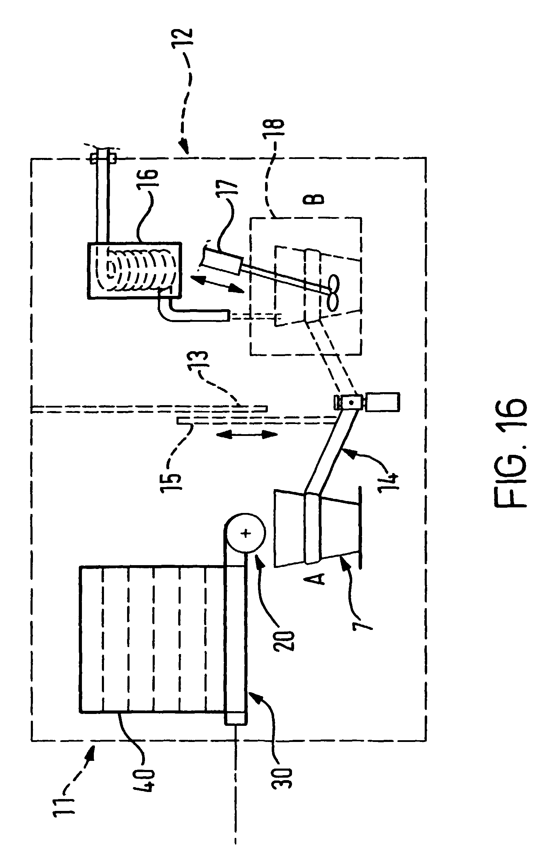

Figure 16 illustrates an advantageous exemplary arrangement of the preparation device in the chamber of a machine of the automatic dispenser type. In this instance, the proposal is for the surroundings in which the abraded residue is produced, the so-called "dry zone" 11, to be separated from the surroundings in which the residue is mixed with the determined amount of water, the so-called "wet zone" 12. The two zones 11 and 12 are preferably separated in such a way as to avoid water vapour and splashes from passing from the wet zone to the dry zone. Thus, a vapour barrier 13 may advantageously be installed between the two zones. The dry zone may also be isolated from the moisture outside the machine by appropriate isolating means. This thus prevents the sticks from absorbing moisture and therefore promotes homogeneity of the mechanical properties of the sticks and, in consequence, constant quantity and quality of the abraded residue. To achieve that, the device for abrading the sticks, comprising the abrasion unit 20, pressing unit 30 and storage unit 40 are placed in the dry zone. The collection means may be a cup 7 arranged vertically in line with the abrading unit so as to collect the dry residue. The cup is conveyed to the wet zone by a means 14 for taking hold of the cup and which can be moved between the position A for collection of residue and the position B for service in the serving chamber 18. A means such as this is known in the state of the art and could be an arm, articulated in one or more directions, for example. Opening means such as a commanded automatically opening hatch 15 may be installed between the two zones. Once in the service position B, the preparation of the beverage is completed by the addition of cold or hot water. In the case of a hot beverage, a heating means of the unit heater 16 or equivalent type is placed in the wet zone and connected to a drinking water supply, so as to heat up the water to the required temperature. The residue/water mixture can be mixed by a mixing means 17. The complete preparation cycle is of course managed by control means known to those skilled in the art (and not depicted).

Of course, the invention is not simply restricted to the embodiments described but may also cover alternative forms which may be considered as equivalents and which fall within the scope of the claims which follow.

## Claims

1. Device for preparing beverages, particularly intended to equip an automatic dispenser system, comprising:
an abrading or cutting means (20),
a pressing means (30) acting on a solid and compact refill (5) based on water-dispersible material, the pressing means (30) exerting a pushing force on the refill (5) against the said abrading means (20) so as to release a determined amount of product thus abraded or cut,
a means (7) for collecting the amount of abraded or cut product.

2. Device according to Claim 1, characterized in that the abrading or cutting means (20) is a rotary element (21) comprising an abrading or cutting surface of roughly cylindrical shape extending around an axis of rotation (O) roughly perpendicular to the direction of pushing (I) in which the path of the pressing means (30) lies.

3. Device according to Claim 2, characterized in that it comprises a guide surface (36) on which the refill (5) is guided towards the abrading or cutting means (20) under the pushing force exerted by the pressing means (30), the said guide surface being located above the axis of rotation (O) of the rotary element (21).

4. Device according to Claim 3, characterized in that the pressing means (30) comprises a piston unit (31) with a pushing surface (310) intended to come into contact with a complementary surface of the refill (5) and oriented roughly perpendicularly to the direction of pushing (I).

5. Device according to Claim 3 or 4, characterized in that a refill is fed onto the guide surface (36) after the pressing means (30) has retreated by a length at least equivalent to that of a new refill (5b) ; the said element (5b) being engaged by means of a transverse pushing member (43) exerting a pushing force in a direction (J) parallel to the horizontal plane (P) and perpendicular to the direction of pushing (I) of the pressing means (30).

6. Device according to Claim 5, characterized in that it comprises a feed unit (40) comprising a reservoir (41) forming a housing (42) running roughly vertically in a plane (P1) roughly parallel to the direction of pushing (I) so as to constitute a vertical stack of a number of refills; the reservoir (41) comprising a bottom through-opening (49) allowing a new refill (5b) corresponding to the lowermost refill in the stack, to be engaged under the pushing effect of the transverse pushing member (43) thus causing the refill (5b) to move from the plane (P1) onto the line of the pushing force (I) of the pressing means (30).

7. Device according to any one of the preceding claims, characterized in that the collection means (7) is a removable serving container such as a cup, a mug or a bowl.

8. Device according to any one of Claims 1 to 6, characterized in that the collection means (7) is a nonremovable element of the device, supplied with water, such as a mixing chamber.

9. Stick based on material that can be dispersed in a liquid medium and intended to be used as a refill in the device according to any one of Claims 1 to 8.

10. Method for preparing a preparation based on a water-dispersible foodstuff, comprising
an abrading operation performed on a solid and relatively compact refill (5) based on the said foodstuff product by a mechanical abrading or cutting means (20) so as to release a determined amount of product in an abraded or cut form,
an operation of mixing the amount of product thus released with a determined volume of liquid so as to reconstitute the said preparation.

11. Dispensing method according to Claim 10, characterized in that the released amount of abraded or cut product is determined according to a measurement of the relative forward progression of the solid refill (5) with respect to the mechanical abrading means or any other fixed reference means belonging to the device.

12. Dispensing method according to Claim 10, characterized in that the released amount of abraded or cut product is determined according to a measurement of the mass of abraded or cut product released.

13. Product based on a foodstuff, characterized in that it is in the form of a solid element which can be gradually abraded or cut to the form of residue of powder, granules, flakes or chips, with the ability of dispersing in a liquid medium.

14. Product according to Claim 13, characterized in that the solid element is in the form of a stick, pellet, plug or tablet.

15. Product according to Claim 13 or 14, characterized in that the residue of powder, granules, flakes or chips has the ability of dispersing in an aqueous medium.

16. Product according to one of Claims 13, 14 or 15, characterized in that the solid refill has a mass per unit volume of between 0.75 and 1.65 g/cm³.

17. Product according to any one of Claims 13 to 16, characterized in that the solid refill is formed of particles, powder or granules, which have been compressed.

18. Product according to any one of Claims 13 to 16, characterized in that the solid refill is formed of extruded particles, powder or granules.

19. Product according to any one of Claims 13 to 16, characterized in that the foodstuff used to make the solid refill is chosen from pulverulent composition based on powdered or agglomerated concentrate of soluble coffee, cocoa, milk, chicory, soups, sauces or fruit-flavoured compositions which may be sweetened or provide energy and which can be reconstituted in a liquid medium.

20. Method of manufacturing a refill of water-dispersible material according to any one of the preceding claims, characterized in that it comprises the following operations:
a predetermined volume of pulverulent material is placed in a mould (8),
the said volume is subjected to sufficient compression to lead to the formation of a solid block when the compression force is released,
the said block (5) thus formed is released from the mould.

21. Method according to Claim 20, characterized in that the pulverulent material is heated prior to and/or during the compression force.

22. Method according to Claim 20 or 21, characterized in that a compression of between 20 and 50 MPa is applied.

23. Method according to Claim 20 or 21, characterized in that a compression is applied until such time as a solid block with a mass per unit volume of between 0.75 and 1.65 g/cm³ is obtained.

24. Method according to any one of Claims 20 to 23, characterized in that the pulverulent material is brought up to a temperature of between 20 and 80°C.

25. Method for manufacturing a refill made of water-dispersible material according to any one of the preceding claims, characterized in that it comprises the following operations:
a continuous strip (90) of pulverulent material (92) is extruded,
the continuous strip is subjected to rolling in at least two distinct directions perpendicular to the longitudinal direction of travel of the strip so as to form a rolled strip (96), the mass per unit volume of which is roughly uniform,
the strip is cut into sections (97a, 97b) of the desired length.
